# EUROPÄISCHE PATENTSCHRIFT

(11) **EP 1 082 566 B1**
(45) Veröffentlichungstag und Bekanntmachung des Hinweises auf die Patenterteilung: **01.10.2003**
(21) Anmeldenummer: 99927863.3
(22) Anmeldetag: 02.06.1999
(51) Int. Cl.: F16K 24/00

(54) **TANKSCHUTZVENTIL**
TANK SAFETY VALVE
SOUPAPE DE SECURITE DE RESERVOIR

(30) Priorität: 03.06.1998 DE 19824791
(43) Veröffentlichungstag der Anmeldung: 14.03.2001
(73) Patentinhaber: A. Kayser Automotive Systems GmbH, 37574 Einbeck (DE)
(72) Erfinder: MOSES, Erhard, D-37574 Einbeck-Salzderhelden (DE); WALLBAUM, Torsten, D-31089 Duingen (DE)
(74) Vertreter: Müller-Boré & Partner Patentanwälte
(86) Internationale Anmeldenummer: EP9903855
(87) Internationale Veröffentlichungsnummer: WO99063255

(56) Entgegenhaltungen:
- EP-A1- 0 275 427
- US-A- 5 680 848
- US-A- 5 730 423

## Beschreibung

Die Erfindung betrifft ein Kraftstofftankent- und belüftungsventil, wie es im Oberbegriff von Anspruch 1 beschrieben ist.

Derartige Ventile sind im Stand der Technik bekannt, siehe z. B. US-A-5 680 848. Die Ent- und Belüftung eines Kraftstofftanks muß während der Betankung, des Betriebes und der Stillstandphase sichergestellt sein. Üblicherweise sind solche Ventile zwischen dem Kraftstofftank und dem Aktivkohlefilter (AKF) angeordnet. Beim Betanken entsteht im Kraftstofftank aufgrund des zugeführten Kraftstoffs und eines Saugstrahlpumpeneffektes ein Überdruck der über das Ventil dem AKF zugeführt wird, um eine emissionsfreie Betankung zu gewährleisten (onboard refueling vapour recovery / ORVR). Weiterhin müssen die entstehenden Kraftstoffdämpfe sowohl beim Stillstand als auch im Fahrbetrieb dem AKF zugeführt werden. Im Fahrbetrieb werden während der Spülphasen die Kraftstoffdämpfe aus dem AKF in den Gaszufuhrstrom des Verbrennungsmotors gesaugt, wobei das Ventil den Kraftstofftank vor einem an dem Filter anliegenden Unterdruck schützt.

Eine Öffnungs- und Schließbewegung eines solchen Ventils bzw. Tankschutzventils wird herkömmlicherweise durch eine in dem Ventil angeordnete flexible Membran aus einem Elastomer ermöglicht. Diese elastomeren Membranen weisen nachteilige Eigenschaften bezüglich ihrer Permeabilität für Kohlenwasserstoffgase sowie eine nachteilige Temperaturempfindlichkeit auf. Insbesondere bei tiefen Temperaturen ist die Flexibilität bzw. Elastizität von elastomeren Membranen mit einer erforderlichen Permeabilität so klein, daß eine mangelhafte Funktion oder vollständiger Ausfall des Ventils resultieren kann. Im Hinblick auf die zunehmend strengeren Grenzwerte für Kohlenwasserstoffemissionen für Kraftfahrzeuge, insbesondere in den USA, besteht daher ein Bedarf an einem Ventil, daß auch bei tiefen Temperaturen bis -40°C eine befriedigende Ventilfunktion und Permeabilitätseigenschaft aufweist.

Es ist eine Aufgabe der Erfindung, ein Ventil mit den erforderlichen Permationsund Temperatureigenschaften bereitzustellen.

Die Aufgabe wird durch ein Ventil mit den im Anspruch 1 angegebenen Merkmalen gelöst. Vorteilhafte Ausführungsformen sind Gegenstand der Unteransprüche.

Ein erfindungsgemäßes Ventil weist die in Anspruch 1 definierten Merkmale auf. Überraschenderweise weist eine Metallmembran vorteilhafterweise eine kleine Permeabilität für Kohlenwasserstoffgase, die in Kraftstoffdämpfen enthalten sind, auf. Zusätzlich hat die erfindungsgemäße Metallmembran eine vorteilhafte kleine Temperaturabhängigkeit bezüglich ihrer mechanischen Eigenschaften, insbesondere ihrer Flexibilität, Elastizität und Permeabilität für Gase. Hierdurch kann die Abhängigkeit der Funktionswerte des Ventils sowie der Permeation von Gasen von der Temperatur minimiert werden und vorzugsweise eliminiert werden.

Prinzipiell sind für die Membran alle Metalle geeignet, die als Folie bzw. ausreichend dünn auswälzbar sind. Besonders bevorzugt haben sich Edelstahl und Kupfer - Beryllium als Material für die Membran erwiesen.

Gemäß einer bevorzugten Ausführungsform weist die Membran eine Dicke in einem Bereich von 20µm bis 40µm auf. In diesem Dickenbereich liegt eine ausreichend geringe Permeabilität der Membran bei vorteilhaften mechanischen Eigenschaften, insbesondere großer Elastizität und Flexibilität, vor.

Gemäß einer weiteren bevorzugten Ausführungsform der Erfindung umfaßt das Ventil eine zusätzliche Dichtungseinrichtung zum Abdichten bzw. Schließen des Durchgangs zwischen dem Tankkanal und dem zweiten Kanal. Die Dichtungseinrichtung ist an der Membran angeordnet.

Bevorzugt besteht die Dichtungseinrichtung aus einem elastomeren Material, das eine gute Abdichtwirkung ermöglicht. Die Dichtungseinrichtung braucht hierbei keine geringe Permeabilität gegenüber Kohlenwasserstoffgasen aufzuweisen, da die Dichtfunktion gegenüber der Umgebung von der Membran bereitgestellt wird. Vorzugsweise ist die Dichtungseinrichtung in der Mitte der Membran festgelegt, beispielsweise angeklebt oder aufvulkanisiert.

Gemäß einer weiteren bevorzugten Ausführungsform der Erfindung ist der Tankkanal und der zweite Kanal zusätzlich durch ein Einwegventil miteinander verbunden, das dann öffnet, wenn der Gasdruck in dem zweiten Kanal größer als der Gasdruck in dem Tankkanal ist. Dies ermöglicht eine Belüftung des Kraftstofftanks mit Gas aus dem Filter, insbesondere in Form eines Aktivkohlefilters.

Bevorzugt ist das Einwegventil als Schirmpilzventil ausgelegt.

Gemäß einer weiter bevorzugten Ausführungsform ist die Membran so ausgebildet, daß sie für die Öffnungs- und Schließbewegung eine Dehnung um eine vorbestimmte Weglänge zuläßt. Dies ermöglicht einen vergrößerten Öffnungshub der Membran und so einen vergrößerten freien Öffnungsquerschnitt des Durchgangs.

Vorteilhafterweise kann wenigstens ein Teil der Membran mit Wellungen ausgebildet sein, die im wesentlichen senkrecht zur Dehnungsrichtung verlaufen. Solche Wellungen lassen sich mit einem Formpreßschritt in die Membran bzw. die Membranfolie einpressen und ermöglichen einen wesentlich vergrößerten Hub der Membran.

Gemäß einer weiter bevorzugten Ausführungsform ist die Membran kreisförmig ausgebildet und an ihrem äußeren Umfang mit einem Dichtungsring an zumindest einer Dichtungfläche eines Ventilgehäuses gasdicht gehalten. Der Dichtungsring kann hierbei durch einen Klemmdeckel so an das Ventilgehäuse gepreßt werden, daß er die Membran in gasdichter Weise an die Dichtflächen anlegt.

Die Erfindung wird im folgenden anhand von einer bevorzugten Ausführungsform beispielhaft beschreiben. Es zeigen:
- Figur 1: einen Querschnitt eines erfindungsgemäßen Ventils; und
- Figur 2: einen Querschnitt eines Ausschnitts eines erfindungsgemäßen Ventils, der die Anbindung der Membran an ein Gehäuse zeigt.

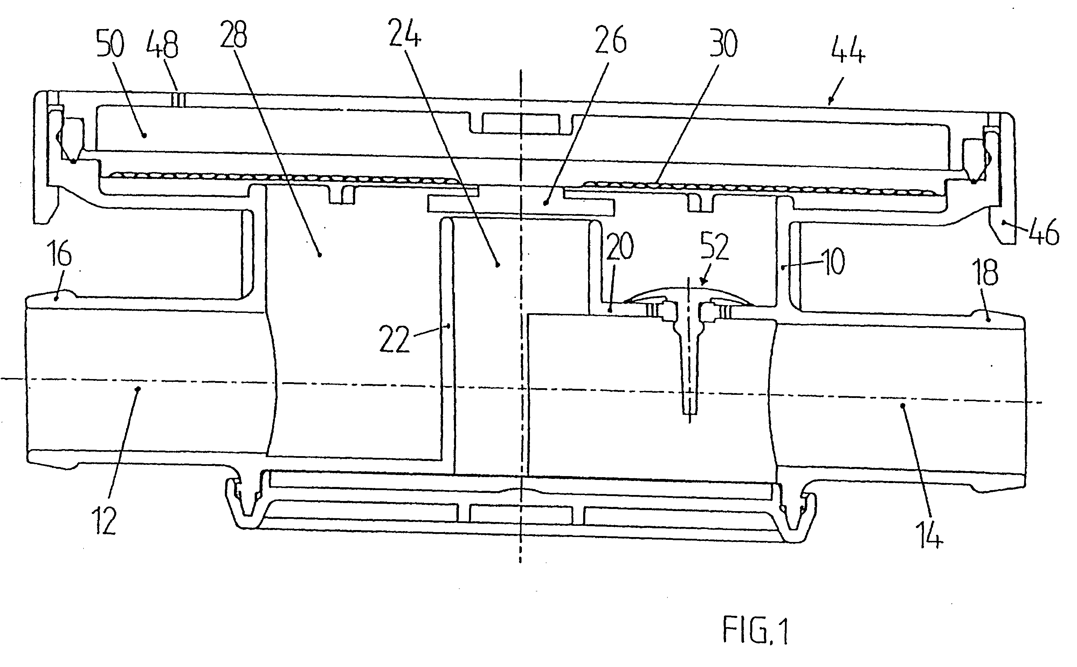

In Figur 1 ist ein Querschnitt eines Ventils gemäß der Erfindung dargestellt. An gegenüberliegenden Seiten eines im wesentlichen rohrförmigen Ventilgehäuses 10 sind ein Tankkanal 12 und ein zweiter Kanal 14 in Form zweier Anschlußstutzen 16, 18 angeordnet. Der Tankkanal 12 steht mit einem Kraftstofftank (nicht dargestellt) und der zweite Kanal 14 steht mit einem Aktivkohlefilter (nicht dargestellt) in Gasströmungsverbindungen. Der Anschlußstutzen 18 des zweiten Kanals 14 ist entlang seiner longitudinalen Achse mit einen rohrförmigen Verbindungskanal 20 verbunden, der in einen offenen, sich ins Innere des Ventils erstreckenden Ventilstutzen 22 mündet. Verbindungskanal 20 und Ventilstutzen 22 bilden einen L-förmigen Durchgang 24, der in einer Gasströmungsverbindung zu dem zweiten Kanal 14 steht. Der Ventilstutzen ist an seinem in longitudinaler Richtung oberen Ende durch eine Dichteinrichtung 26 gegenüber einem, den Ventilstutzen umgebenden Ventilraum 28 abdichtbar. Die Dichtungseinrichtung 26 besteht bevorzugt aus einem elastomeren Material, welches in Anlage mit dem oberen Ende des Ventilstutzens 22 einen gasdichten Abschluß des Durchgangs 24 gegenüber dem Ventilraum 28 ermöglicht. An der dem Ventilstutzen 22 gegenüberliegenden Seite ist die Dichtungseinrichtung 26 auf eine flexible bzw. elastische Membran 30 aufgeklebt bzw. aufvulkanisiert. Die im wesentlichen kreisförmige Membran 30 besteht aus einer Metallfolie, die in der dargestellten Ausführungsform aus Edelstahl oder Kupfer-Beryllium. Die Dicke der Membran 30 liegt bei etwa 30 µm.

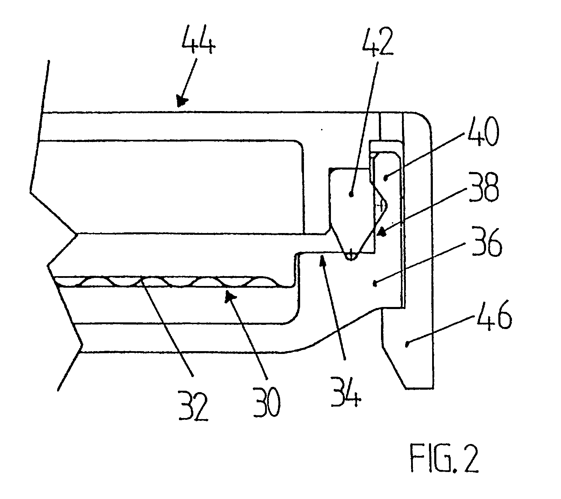

Die Anbindung der Membran 30 an das Ventilgehäuse 10 ist vergrößert in Figur 2 dargestellt. Um einen großen Ventilhub der Dichtungseinrichtung 26 zu ermöglichen, ist die Membran 30 durch einen Formpreßschritt mit radialkonzentrischen Wellungen 32 ausgebildet, die sich somit im wesentlichen senkrecht zur Dehnungsrichtung der Membran 30 erstrecken. An ihrem umfänglichen Rand ist die Membran 30 an einer sich in radialen Richtungen der Membran 30 erstrekkenderi ersten Dichtfläche 34 eines Trägerteils 36 des Ventilgehäuses 10 angelegt. Eine zweite, zylinderinnenwandförmige Dichtfläche 38 ist in einem sich in axialer Richtung erstreckenden, rohrförmigen Vorsprung 40 des Trägerteils 36 so ausgebildet, daß sich die Membran 30 auch an die zweite Dichtfläche 38 anlegen kann. Die Membran 30 wird mit einem Dichtungsring 42, der bei dieser Ausführungsform aus Gummi besteht, über einen Spann- bzw. Klemmdeckel 44 auf der ersten und zweiten Dichtfläche 38 dichtend gehalten. Der Dichtungsring 42 ist in den Figuren mit einer Überdeckung, d.h. unverformt, dargestellt. Die Dichtungsspannung ergibt sich aus dieser Überdeckung. Der Klemmdeckel 44 wird mit einem Klammerteil 46 mit dem Ventilgehäuse 10 verbunden, wobei das Klammerteil 46 mit dem Trägerteil 36 verrastet werden kann. Der Klemmdeckel 44 enthält Luftdurchtrittsöffnungen 48, die zum Druckausgleich des Umgebungsluftdrucks mit einem Luftdruck in einem sich zwischen Membran 30 und Klemmdeckel 44 erstreckenden Deckelraum 50 dienen.

In dem Verbindungsteil 20 ist ein Einwegventil in Form eines Schirmpilzventils 52 so angeordnet, daß es sich öffnet, wenn der Gasdruck in dem zweiten Kanal 14 größer als in dem Tankkanal 12 ist. Das geöffnete Schirmpilzventil 52 stellt eine Gasströmungsverbindung zwischen zweiten Kanal 14 und Tankkanal 12 bereit.

Ein gegenüber dem Luftdruck in dem Deckelraum erhöhter Gasdruck in dem Tankkanal führt zu einer Öffnungsbewegung der mit der Membran 30 verbundenen Dichteinrichtung 26, d.h. zu einer Bewegung in axialer Richtung der Membran weg von dem Ventilstutzen 22. Dadurch können Gase von dem Tankkanal 12 durch den Durchgang 24 in den zweiten Kanal 14 strömen. Liegt im zweiten Kanal 14 gegenüber dem Tankkanal 12 ein Unterdruck vor, so schließt sich sowohl die Dichteinrichtung 26 gasdichtet auf den Ventilstutzen 22 als auch das Schirmpilzventil 52. Ein Unterdruck in dem Tankkanal 12 gegenüber dem Deckelraum 50 und dem zweiten Kanal 14 führt zu einer Öffnung des Schirmpilzventils und bewirkt so eine Belüftung des Kraftstofftanks.

### Bezugszeichenliste

- 10.: Ventilgehäuse
- 12.: Tankkanal
- 14.: zweiter Kanal
- 16.: erster Anschlußstutzen
- 18.: zweiter Anschlußstutzen
- 20.: Verbindungskanal
- 22.: Ventilstutzen
- 24.: Durchgang
- 26.: Dichtungseinrichtung
- 28.: Ventilraum
- 30.: Membran
- 32.: Wellungen
- 34.: erste Dichtfläche
- 36.: Trägerteils
- 38.: zweite Dichtfläche
- 40.: Vorsprung
- 42.: Dichtungsring
- 44.: Klemmdeckel
- 46.: Klammerteil
- 48.: Luftdurchtrittsöffnungen
- 50.: Deckelraum
- 52.: Schirmpilzventil

## Patentansprüche

1. Kraftstofftankent- und belüftungsventil, zum Ent- und Belüften eines Kraftstofftanks, mit einem zum Tank führenden Tankkanal (12) und einem vom Tank wegführenden, insbesondere zu einem Filter führenden, zweiten Kanal (14), mit einer Membran (30) zum Ausführen einer Öffnungs- bzw. Schließbewegung zum Öffnen bzw. Abdichten eines Durchgangs (24) von dem Tankkanal (12) zu dem zweiten Kanal (14), **dadurch gekennzeichnet, daß** die Membran (30) aus Metall besteht.

2. Kraftstofftankent- und belüftungsventil nach Anspruch 1, wobei *das* Metall Edelstahl oder Kupfer-Beryllium ist.

3. Kraftstofftankent- und belüftungsventil nach einem oder mehreren der vorherigen Ansprüche, wobei die Membran (30) eine Dicke in einem Bereich von 20µm bis 40µm aufweist.

4. Kraftstofftankent- und belüftungsventil nach einem oder mehreren der vorherigen Ansprüche, wobei der Durchgang (24) durch eine Dichtungseinrichtung (26) abdichtbar ist, die an der Membran (30) angeordnet ist.

5. Kraftstofftankent- und belüftungsventil nach Anspruch 4, wobei die Dichtungseinrichtung (26) aus einem elastomeren Material besteht und auf die Membran (30) aufvulkanisiert oder aufgeklebt ist.

6. Kraftstofftankent- und belüftungsventil nach einem oder mehreren der vorherigen Ansprüche, wobei der Tankkanal (12) und der zweite Kanal (14) zusätzlich durch ein Einwegventil (52) miteinander verbunden sind, das dann öffnet, wenn der Gasdruck in dem zweiten Kanal (14) größer als der Gasdruck in dem Tankkanal (12) ist.

7. Kraftstofftankent- und belüftungsventil nach Anspruch 6, wobei das Einwegventil (52) ein Schirmpilzventil (52) ist.

8. Kraftstofftankent- und belüftungsventil nach einem oder mehreren der vorherigen Ansprüche, wobei die Membran (30) so ausgebildet ist, daß sie für die Öffnungs- und Schließbewegung eine Dehnung um eine vorbestimmte Weglänge zuläßt.

9. Kraftstofftankent- und belüftungsventil nach einem oder mehreren der vorherigen Ansprüche, wobei wenigstens ein Teil der Membran (30) mit Wellungen (32) ausgebildet ist, die im wesentlichen senkrecht zur Dehnungsrichtung verlaufen.

10. Kraftstofftankent- und belüftungsventil nach einem oder mehreren der vorherigen Ansprüche, wobei die Membran (30) kreisförmig ausgebildet ist und an ihrem äußeren Umfang mit einem Dichtungsring (42) an zumindest einer Dichtungfläche (34, 38) eines Ventilgehäuses (10, 36) gasdicht gehalten wird.

## Claims

1. Fuel-tank valve for extracting air from a fuel tank and admitting air into the same, having a tank duct (12) leading to the tank and a second duct (14) leading away from the tank, in particular leading to a filter, and having a diaphragm (30) for executing an opening or closing movement for respectively opening or sealing a through-passage (24) from the tank duct (12) to the second duct (14), **characterized in that** the diaphragm (30) consists of metal.

2. Fuel-tank valve according to Claim 1, in the case of which the metal is high-grade steel or copper/beryllium.

3. Fuel-tank valve according to one or more of the preceding claims, in the case of which the diaphragm (30) has a thickness in a range of from 20 µm to 40 µm.

4. Fuel-tank valve according to one or more of the preceding claims, in the case of which the through-passage (24) can be sealed by a sealing device (26) which is arranged on the diaphragm (30).

5. Fuel-tank valve according to Claim 4, in the case of which the sealing device (26) consists of an elastomeric material and is vulcanized or adhesively bonded to the diaphragm (30).

6. Fuel-tank valve according to one or more of the preceding claims, in the case of which the tank duct (12) and the second duct (14) are connected to one another in addition by a one-way valve (52), which opens when the gas pressure in the second duct (14) is higher than the gas pressure in the tank duct (12).

7. Fuel-tank valve according to Claim 6, in the case of which the one-way valve (52) is an umbrella-type mushroom valve (52).

8. Fuel-tank valve according to one or more of the preceding claims, in the case of which the diaphragm (30) is designed such that, for the opening and closing movements, it allows an expansion by a predetermined distance.

9. Fuel-tank valve according to one or more of the preceding claims, in the case of which at least part of the diaphragm (30) is designed with corrugations (32) which run essentially perpendicularly to the expansion direction.

10. Fuel-tank valve according to one or more of the preceding claims, in the case of which the diaphragm (30) is of circular design and, on its outer circumference, is retained in a gas-tight manner by way of a sealing ring (42) on at least one sealing surface (34, 38) of a valve housing (10, 36).

## Revendications

1. Valve de désaérage et d'aération de réservoir de carburant pour désaérer et aérer un réservoir de carburant, dotée d'un canal de réservoir (12) menant au réservoir et d'un deuxième canal (14) s'éloignant du réservoir, et menant tout particulièrement vers un filtre, d'une membrane (30) destinée à exécuter un mouvement d'ouverture et/ou de fermeture afin d'ouvrir et/ou de fermer de manière étanche un passage (24) depuis le canal de réservoir (12) vers le second canal (14), **caractérisée en ce que** la membrane (30) est en métal.

2. Valve de désaérage et d'aération d'un réservoir de carburant selon la revendication 1, dans laquelle le métal est de l'acier spécial ou du cuivre béryllium.

3. Valve de désaérage et d'aération d'un réservoir de carburant selon une ou plusieurs des revendications précédentes, dans laquelle la membrane (30) présente une épaisseur variant entre 20 µm et 40 µm.

4. Valve de désaérage et d'aération d'un réservoir de carburant selon une ou plusieurs des revendications précédentes, dans laquelle le passage (24) est rendu étanche par un dispositif d'étanchéité (26), lequel est agencé sur la membrane (30).

5. Valve de désaérage et d'aération d'un réservoir de carburant selon la revendication 4, dans laquelle le dispositif d'étanchéité (26) comprend un élastomère et est fixé par vulcanisation ou collé sur la membrane (30).

6. Valve de désaérage et d'aération d'un réservoir de carburant selon une plusieurs des revendications précédentes, dans laquelle le canal de réservoir (12) et le deuxième canal (14) sont également raccordés ensemble par une valve unidirectionnelle (52), laquelle s'ouvre lorsque la pression de gaz dans le deuxième canal (14) est supérieure à la pression de gaz dans le canal de réservoir (12).

7. Valve de désaérage et d'aération d'un réservoir de carburant selon la revendication 6, dans laquelle la valve unidirectionnelle (52) est un clapet champignon de protection (52).

8. Valve de désaérage et d'aération d'un réservoir de carburant selon une ou plusieurs des revendications précédentes, dans laquelle la membrane (30) est conçue de façon à permettre une extension d'une certaine longueur pour le mouvement d'ouverture et de fermeture.

9. Valve de désaérage et d'aération d'un réservoir de carburant selon une ou plusieurs des revendications précédentes, dans laquelle au moins une partie de la membrane (30) est conçue avec des ondulations (32), lesquelles s'étirent sensiblement perpendiculairement à la direction d'extension.

10. Valve de désaérage et d'aération d'un réservoir de carburant selon une ou plusieurs des revendications précédentes, dans laquelle la membrane (30) est formée de manière circulaire et est maintenue étanche au gaz au niveau de sa périphérie extérieure par une bague d'étanchéité (42) agencée sur au moins une surface d'étanchéité (34, 38) d'une cage de Valve (10, 36).
